# EUROPEAN PATENT APPLICATION

(11) **EP 4 379 851 A1**
(43) Date of publication of application: **05.06.2024**
(21) Application number: 22849018.1
(22) Date of filing: 30.05.2022
(51) Int. Cl.: H01M 4/134, H01M 4/36, H01M 4/38, H01M 4/62, H01M 10/052, H01M 10/0562

(54) **NEGATIVE ELECTRODE MATERIAL, NEGATIVE ELECTRODE, BATTERY, AND METHOD FOR PRODUCING SAME**

(30) Priority: 28.07.2021 JP 2021123067
(71) Applicant: Panasonic Intellectual Property Management Co., Ltd., Kadoma-shi, Osaka 571-0057 (JP)
(72) Inventor: HIRASE, Masaki, Tokyo 103-0022 (JP); YABE, Hiroki, Tokyo 103-0022 (JP)
(74) Representative: Grünecker Patent- und Rechtsanwälte PartG mbB
(86) International application number: PCT/JP2022/021998
(87) International publication number: WO 2023/007939

(57) **Abstract**

A negative electrode material according to the present disclosure includes a plurality of composite particles including an active material containing silicon, a first solid electrolyte, and a first conductive material and a second solid electrolyte, wherein the second solid electrolyte is present between the composite particle and the composite particle.

## Description

### Technical Field

The present disclosure relates to a negative electrode material, a negative electrode, a battery, and a producing method of the same.

### Background Art

In recent years, all-solid-state secondary batteries have attracted attention as nonaqueous electrolyte secondary batteries. An all-solid-state secondary battery includes, for example, a positive electrode, a negative electrode, and a solid electrolyte layer. The all-solid-state secondary battery includes a solid electrolyte as a medium for conducting lithium ions.

For example, PTL 1 to PTL 3 disclose nonaqueous electrolyte batteries including a negative electrode containing a solid electrolyte.

### Citation List

### Patent Literature

PTL 1: Japanese Unexamined Patent Application Publication No. 2020-21674
PTL 2: International Publication No. 2017/169616
PTL 3: International Publication No. 2020/129879

### Non Patent Literature

NPL 1: Nobuo Ogihara et al., "Theoretical and Exprimental Analysis of Porous electrodes for Lithium-Ion Batteries by Electrochemical Impedance Spectroscopy Using a Symmetric Cell", Jounal of the Electrochemical Society, 2012, 159 (7), A1034-A1039

### Summary of Invention

### Technical Problem

In the related art, it is desirable that the ionic conductivity of an active material containing silicon and a negative electrode material containing a solid electrolyte be improved.

### Solution to Problem

The present disclosure provides
a negative electrode material including
a plurality of composite particles including an active material containing silicon, a first solid electrolyte, and a first conductive material and
a second solid electrolyte,
wherein the second solid electrolyte is present between the composite particle and the composite particle.

### Advantageous Effects of Invention

According to the present disclosure, the ionic conductivity of a negative electrode material including an active material containing silicon and a solid electrolyte can be improved.

### Brief Description of Drawings

[Fig. 1] Fig. 1 is a schematic sectional view illustrating the configuration of a battery according to an embodiment.
[Fig. 2] Fig. 2 is an enlarged view of a portion in Fig. 1 schematically illustrating a negative electrode active material layer.
[Fig. 3] Fig. 3 is a schematic sectional view illustrating a composite particle.
[Fig. 4] Fig. 4 is a schematic sectional view illustrating a local structure of a negative electrode.
[Fig. 5] Fig. 5 is a step diagram illustrating a method for producing a negative electrode.

### Description of Embodiments

### (Underlying knowledge forming basis of the present disclosure)

Graphite has been used as an active material of a nonaqueous electrolyte secondary battery in the related art. In recent years, to improve the energy density of a nonaqueous electrolyte secondary battery, silicon has been proposed as a negative electrode active material. Silicon is one of materials capable of forming an alloy with lithium. The capacity per unit mass of silicon is greater than the capacity per unit mass of graphite. Meanwhile, silicon expands and shrinks to a great extent in accordance with charge and discharge. Consequently, a battery including silicon as a negative electrode active material has a problem that recycle characteristics readily deteriorate due to poor contact between active material particles, poor contact between active material particles and a collector, or the like.

In an all-solid-state battery, all interfaces between materials are solid-solid interfaces. Therefore, a deterioration in bonding state at a solid-solid interface due to expansion and shrinkage of an active material has a great influence on the performance of a battery. In particular, when a material such as silicon which expands and shrinks to a great extent in accordance with charge and discharge is used for a negative electrode, a problem in terms of a deterioration in cycle characteristics tends to occur.

To improve the performance of a battery by suppressing a deterioration in bonding state at a solid-solid interface, it is proposed that the diameter of active material particles are controlled. PTL 1 proposes that, when silicon particles having an average particle diameter of 0.19 µm are used, a change in the volume of a battery due to charge and discharge decreases compared with an instance when silicon particles having an average particle diameter of 2.6 µm are used.

The silicon particles having a small average particle diameter have an advantage in suppressing a negative electrode from deteriorating due to a change in volume. However, according to investigations by the present inventors, silicon particles having a small average particle diameter realize problems that an ionic conduction path of a solid electrolyte between silicon particles is narrow, that the connectivity between solid electrolyte particles is poor, and that the contact surface between silicon particles and a solid electrolyte is not readily ensured. In addition, to use silicon particles having a small average particle diameter, the average particle diameter of solid electrolyte particles has to be decreased. This causes other problems in terms of complication of a solid electrolyte producing method, a decrease in the strength of a negative electrode, and the like.

In consideration of the above-described circumstances, the present inventors performed repeated intensive investigations on technology to improve the ionic conductivity of an active material containing silicon and a negative electrode material containing a solid electrolyte. As a result, the present disclosure was realized.

### (Outline of aspect according to the present disclosure)

A negative electrode material according to a first aspect of the present disclosure includes
a plurality of composite particles including an active material containing silicon, a first solid electrolyte, and a first conductive material and
a second solid electrolyte,
wherein the second solid electrolyte is present between the composite particle and the composite particle.

According to the first aspect, the ionic conductivity of the negative electrode material including an active material containing silicon and a solid electrolyte can be improved.

Regarding a second aspect of the present disclosure, for example, in the negative electrode material according to the first aspect, the second solid electrolyte may have the same chemical composition as the chemical composition of the first solid electrolyte. According to such a configuration, the ionic conductivity of a solid electrolyte portion in the negative electrode can be improved.

Regarding a third aspect of the present disclosure, for example, in the negative electrode material according to the first aspect, the second solid electrolyte may have a chemical composition different from the chemical composition of the first solid electrolyte. According to such a configuration, the input-output characteristics of a battery may be improved compared with an instance when a solid electrolyte having the same composition is used.

Regarding a fourth aspect of the present disclosure, for example, in the negative electrode material according to any one of the first aspect to the third aspect, an average particle diameter of the plurality of composite particles may be greater than or equal to 3 µm and less than or equal to 12 µm. The average particle diameter of the composite particles being appropriately adjusted improves the connectivity of the second solid electrolyte introduced between the composite particle and the composite particle and improves the ionic conductivity of a solid electrolyte portion in the negative electrode.

Regarding a fifth aspect of the present disclosure, for example, in the negative electrode material according to any one of the first aspect to the fourth aspect, the active material containing silicon may have a shape of a particle, and an average particle diameter of particles of the active material containing silicon may be less than or equal to 1 µm . The particles having a small average particle diameter of the active material containing silicon have an advantage in suppressing the volume of a battery from changing due to charge and discharge.

Regarding a sixth aspect of the present disclosure, for example, in the negative electrode material according to any one of the first aspect to the fifth aspect, the first solid electrolyte may have a shape of a particle, and an average particle diameter of particles of the first solid electrolyte may be less than or equal to 1 µm . When the first solid electrolyte has an appropriate average particle diameter, the first solid electrolyte is not readily separated in the interior of the composite particle.

Regarding a seventh aspect of the present disclosure, for example, in the negative electrode material according to any one of the first aspect to the sixth aspect, the second solid electrolyte may have a shape of a particle, and an average particle diameter of particles of the second solid electrolyte may be less than or equal to 1 µm . When the second solid electrolyte has an appropriate average particle diameter, the second solid electrolyte introduced between the composite particle and the composite particle is not readily separated.

Regarding an eighth aspect of the present disclosure, for example, in the negative electrode material according to any one of the first aspect to the seventh aspect, the first conductive material may contain a first carbon material. The carbon material is light and chemically stable and, therefore, is suitable for the first conductive material.

Regarding a ninth aspect of the present disclosure, for example, in the negative electrode material according to the eighth aspect, the first carbon material may contain carbon fiber. According to such a configuration, the electron conductivity in the interior of the composite particle can be effectively enhanced.

Regarding a tenth aspect of the present disclosure, for example, in the negative electrode material according to the ninth aspect, an average fiber diameter of the carbon fiber may be less than or equal to 0.2 µm. According to such a configuration, the first carbon material does not readily hinder an ionic conduction path in the interior of the composite particle.

Regarding an eleventh aspect of the present disclosure, for example, the negative electrode material according to any one of the first aspect to the tenth aspect may further include a second conductive material, and the second conductive material may be present between the composite particle and the composite particle. According to such a configuration, the electron conductivity in the interior of the negative electrode and between the composite particles can be further enhanced.

Regarding a twelfth aspect of the present disclosure, for example, in the negative electrode material according to the eleventh aspect, the second conductive material may contain a second carbon material. The carbon material is light and chemically stable and, therefore, is suitable for the second conductive material.

A negative electrode according to a thirteenth aspect of the present disclosure includes
a negative electrode collector, and
a negative electrode active material layer supported by the negative electrode collector,
wherein the negative electrode active material layer contains the negative electrode material according to any one of the first aspect to the twelfth aspect.

According to the thirteenth aspect, a negative electrode having excellent ionic conductivity can be obtained.

Regarding the fourteenth aspect of the present disclosure, in a cross section of the negative electrode according to the thirteenth aspect, the second solid electrolyte may have a plurality of crushed phases, and the first solid electrolyte may have a plurality of phases distributed in the interior of the plurality of composite particles, and the plurality of phases of the first solid electrolyte included in the plurality of composite particles and the plurality of phases of the second solid electrolyte may have no orientation in a specific direction. According to such a configuration, the ionic conductivity of the negative electrode can be improved.

A battery according to a fifteenth aspect of the present disclosure includes
a positive electrode,
the negative electrode according to the thirteenth aspect or the fourteenth aspect, and
a solid electrolyte layer disposed between the positive electrode and the negative electrode.

According to the fifteenth aspect, a battery having excellent input-output characteristics is obtained.

A method for producing a negative electrode material according to a sixteenth aspect of the present disclosure includes
mixing
a plurality of composite particles including an active material containing silicon, a first solid electrolyte, and a first conductive material and
a second solid electrolyte,
wherein the second solid electrolyte is present between the composite particle and the composite particle.

Regarding a seventeenth aspect of the present disclosure, for example, the method for producing a negative electrode material according to the sixteenth aspect further includes producing the composite particles by mixing the active material containing silicon, the first solid electrolyte, and the first conductive material.

A method for producing a negative electrode according to an eighteenth aspect of the present disclosure includes, for example, molding the negative electrode material produced by the method for producing a negative electrode material according to the sixteenth aspect or the seventeenth aspect.

A method for producing a battery according to a nineteenth aspect of the present disclosure includes, for example, laminating a negative electrode produced by the method for producing a negative electrode according to the eighteenth aspect, an electrolyte layer, and a positive electrode.

The embodiment according to the present disclosure will be described below with reference to the drawings.

### (Embodiment)

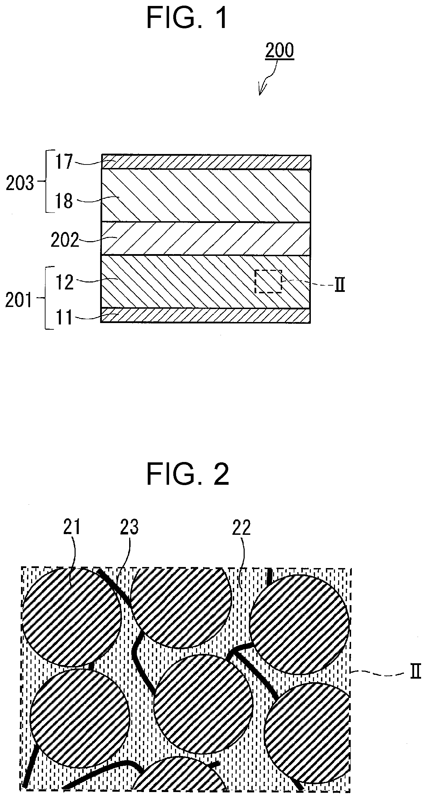

Fig. 1 is a schematic sectional view illustrating the configuration of a battery 200 according to an embodiment. The battery 200 includes a negative electrode 201, a solid electrolyte layer 202, and a positive electrode 203. The solid electrolyte layer 202 is disposed between the negative electrode 201 and the positive electrode 203. The negative electrode 201 occludes and releases lithium in accordance with charge and discharge. The positive electrode 203 also occludes and releases lithium in accordance with charge and discharge.

### (Negative electrode 201)

The negative electrode 201 includes a negative electrode collector 11 and a negative electrode active material layer 12. The negative electrode active material layer 12 is supported by the negative electrode collector 11. The negative electrode collector 11 and the negative electrode active material layer 12 are in contact with each other. The negative electrode active material layer 12 is disposed between the negative electrode collector 11 and the solid electrolyte layer 202. The negative electrode collector 11 is formed of a conductive material such as a metal material or a carbon material.

The thickness of the negative electrode 201 may be greater than or equal to 10 µm and less than or equal to 500 µm. When the thickness of the negative electrode 201 is greater than or equal to 10 µm, the energy density of the battery 200 is sufficiently ensured. When the thickness of the negative electrode 201 is less than or equal to 500 µm, the battery 200 can function with a high output.

Fig. 2 is an enlarged view of a portion in Fig. 1 schematically illustrating the negative electrode active material layer 12. As illustrated in Fig. 2, the negative electrode active material layer 12 includes a plurality of composite particles 21, a second solid electrolyte 22, and a second conductive material 23 as negative electrode materials. The second solid electrolyte 22 is present between the composite particle 21 and the composite particle 21. The second solid electrolyte 22 may have the shape of a particle. Particles of the second solid electrolyte 22 are coupled to each other and, an ionic conduction path is thereby formed in the interior of the negative electrode active material layer 12. The second conductive material 23 may have the shape of a particle. Particles of the second conductive material 23 are coupled to each other and, an electron conduction path is thereby formed in the interior of the negative electrode active material layer 12.

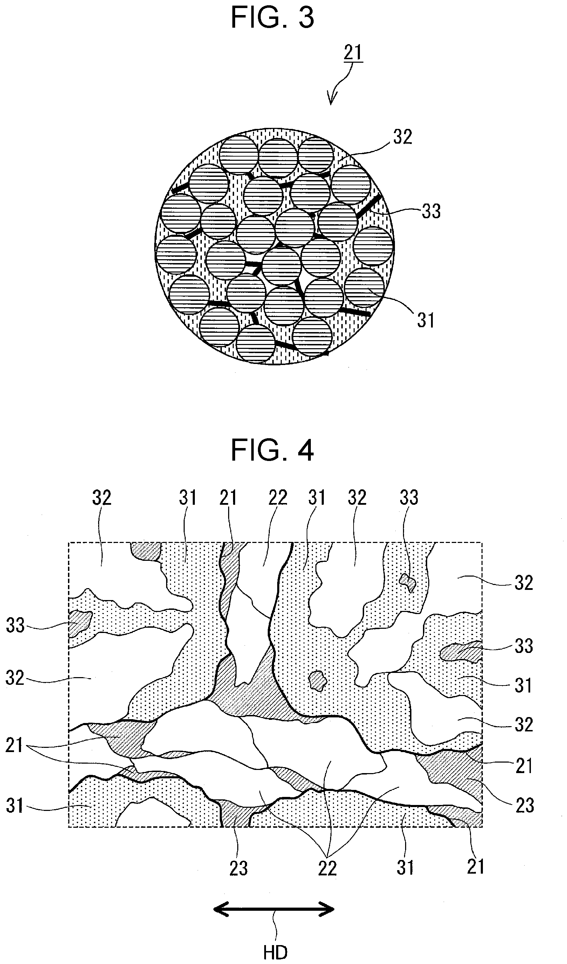

Fig. 3 is a schematic sectional view illustrating a composite particle 21. As illustrated in Fig. 3, the composite particle 21 includes silicon 31, a first solid electrolyte 32, and a first conductive material 33. In the composite particle 21, each of the silicon 31, the first solid electrolyte 32, and the first conductive material 33 may have the shape of a particle and is not limited to having the clear shape of a particle. In a cross section of the composite particle 21, a phase of the silicon 31 and a phase of the first solid electrolyte 32 may be mixed with each other. In a cross section of the composite particle 21, the first conductive material 33 appears as, for example, a plurality of regions in a spot pattern.

According to the configuration illustrated in Fig. 2 and Fig. 3, the silicon 31 is taken in the composite particle 21. The particle diameter of the composite particle 21 is greater than the particle diameter of the silicon 31 in the interior of the composite particle 21. Consequently, for example, even when a solid electrolyte having a particle diameter greater than the particle diameter of the silicon 31 is used as the second solid electrolyte 22, the second solid electrolyte 22 is densely introduced between the composite particle 21 and the composite particle 21, and a gap between the composite particle 21 and the composite particle 21 can be decreased. As a result, the second solid electrolyte 22 is coupled to each other almost throughout the interior of the negative electrode active material layer 12, and the ionic conductivity of a solid electrolyte portion in the negative electrode active material layer 12 can be improved. In addition, the contact surface between the composite particle 21 and the second solid electrolyte 22 is increased.

In the interior of the composite particle 21, the first solid electrolyte 32 included in the composite particle 21 serves as an ionic conduction path branched from the second solid electrolyte 22 introduced around the composite particle 21 so as to increase the contact area between the silicon 31 and the second solid electrolyte 22. The first conductive material 33 contained in the composite particle 21 enhances the electron conductivity in the interior of the composite particle 21 and, in addition, also enhances the electron conductivity between the composite particle 21 and the composite particle 21.

In the present embodiment, the second conductive material 23 is also included in the negative electrode active material layer 12. The second conductive material 23 also has the shape of a particle. The particles of the second conductive material 23 are dispersed in the negative electrode active material layer 12. The second conductive material 23 is present between the composite particle 21 and the composite particle 21. The second conductive material 23 also contributes to a decrease of a gap between the composite particle 21 and the composite particle 21.

The composite particle 21 is a particle granulated from a powder of the silicon 31, a powder of the first solid electrolyte 32, and a powder of the first conductive material 33. The composite particle 21 may be a secondary particle. A binder may be used to granulate the composite particle 21. The composite particle 21 may be a sintered material of all materials. In the interior of the composite particle 21, a relatively large phase of the silicon 31 may be formed by small particles of the silicon 31 being aggregated. In the interior of the composite particle 21, a relatively large phase of the first solid electrolyte 32 may be formed by small particles of the first solid electrolyte 32 being aggregated. A plurality of phases of the silicon 31 and a plurality of phases of the first solid electrolyte 32 are mixed so as to form a composite particle 21. The phase of the silicon 31 and the phase of the first solid electrolyte 32 may be exposed at the surface of the composite particle 21.

The average particle diameter of the composite particle 21 is, for example, greater than or equal to 3 µm and less than or equal to 12 µm. The average particle diameter of the composite particle 21 being appropriately adjusted improves the connectivity of the second solid electrolyte 22 introduced between the composite particle 21 and the composite particle 21 and improves the ionic conductivity of a solid electrolyte portion in the negative electrode 201. In addition, since the contact surface between the silicon 31 and the first solid electrolyte 32 in the interior of the composite particle 21 is sufficiently ensured, the battery 200 having excellent input-output characteristics is obtained.

In the present specification, the average particle diameters of various particles may be calculated by the following method. A cross section of the structure including the particles is observed using an electron microscope, and the area of a specific particle in the microscope image is calculated through image processing. The diameter of a circle having an area equal to the calculated area is assumed to be the diameter of the specific particle. The diameters of arbitrary number (for example, 10) of particles are calculated, and an average value thereof is assumed to be the average particle diameter of the particles. When target particles are selected, fine particles or coarse particles having a size out of an ordinary size are excluded.

Regarding the silicon 31 constituting the composite particle 21, for example, silicon having a purity of greater than or equal to 99% may be used. The silicon 31 may be a single crystal, may be a polycrystal, or may be amorphous.

The silicon 31 may have the shape of a particle. The average particle diameter of particles of the silicon 31 is, for example, less than or equal to 1 µm. The particles of the silicon 31 having a small average particle diameter have an advantage from the viewpoint of suppressing the volume of the battery 200 from changing due to charge and discharge. There is no particular limitation regarding the lower limit of the average particle diameter of particles of the silicon 31, and the lower limit is, for example, 0.1 µm. It is considered that the particles of the silicon 31 are aggregated in the interior of the composite particle 21. Therefore, it is conjectured that the particles of the silicon 31 observed in a cross section of the composite particle 21 have a size greater than the size of the silicon powder used to granulate the composite particle 21.

The first solid electrolyte 32 is a solid electrolyte having lithium ion conductivity. Examples of the solid electrolyte usable for the first solid electrolyte 32 include materials, described later, usable for the solid electrolyte layer 202. For example, a material such as a sulfide solid electrolyte having excellent compression moldability being used for the first solid electrolyte 32 enables the dense composite particle 21 to be obtained by a simple process such as press molding at lower than or equal to 100°C.

The first solid electrolyte 32 may have the shape of a particle. The average particle diameter of particles of the first solid electrolyte 32 is, for example, less than or equal to 1 µm . When the particles of the first solid electrolyte 32 have an appropriate average particle diameter, the first solid electrolyte 32 is not readily separated in the interior of the composite particle 21. In such an instance, the probability of a contact surface between the first solid electrolyte 32 and the silicon 31 being in contact with the second solid electrolyte 22 outside the composite particle 21 increases. As a result, the input-output characteristics of the battery 200 are improved. There is no particular limitation regarding the lower limit of the average particle diameter of the particles of the first solid electrolyte 32, and the lower limit is, for example, 0.1 µm. In this regard, it is considered that the particles of the first solid electrolyte 32 are aggregated in the interior of the composite particle 21.

The first conductive material 33 is responsible for the role of a conductive auxiliary agent. Examples of the first conductive material 33 include carbon materials, metal materials, and conductive ceramics. Of these, carbon materials are light and chemically stable and, therefore, are suitable for the first conductive material 33. Examples of the carbon material include graphite, carbon black, and carbon fiber. The carbon material serving as the first conductive material 33 typically includes carbon fiber. According to such a configuration, the electron conductivity in the interior of the composite particle 21 can be effectively enhanced.

The average fiber diameter of the carbon fiber serving as the first conductive material 33 is, for example, less than or equal to 0.2 µm. According to such a configuration, the first conductive material 33 is readily taken in a phase of the silicon 31 or a phase of the first solid electrolyte 32. Consequently, in the interior of the composite particle 21, the first conductive material 33 does not readily hinder an ionic conduction path. There is no particular limitation regarding the average fiber diameter of the carbon fiber, and the lower limit is, for example, 0.02 µm.

For example, when a material mixture obtained by mixing silicon particles having an average particle diameter of less than or equal to 1 µm, a solid electrolyte having an average particle diameter of less than or equal to 1 µm, and carbon fiber is used to produce a negative electrode, the carbon fiber tends to be oriented in the horizontal direction during a step of pressurizing the negative electrode. In such an instance, the electron conductivity in the thickness direction of the negative electrode may be insufficient. On the other hand, according to the present embodiment, even when the carbon fiber (first conductive material 33) is oriented in the interior of the composite particle 21, since the composite particle 21 points in a random direction, the direction of the carbon fiber is irregular with respect to the whole negative electrode 201. Therefore, according to the present embodiment, it does not readily occur that the electron conductivity is insufficient in a specific direction.

In the present specification, the average fiber diameter of the carbon fiber can be calculated by the following method. A cross section of the structure including the carbon fiber is observed using an electron microscope, and the diameter of a specific carbon fiber in the microscope image is measured through image processing. The diameters of arbitrary number (for example, 10) of carbon fibers are calculated, and an average value thereof is assumed to be the average fiber diameter of the carbon fiber. When target fibers are selected, fine fibers or coarse fibers having a size out of an ordinary size are excluded.

The second solid electrolyte 22 is a solid electrolyte having lithium ion conductivity. Examples of the solid electrolyte usable for the second solid electrolyte 22 include materials, described later, usable for the solid electrolyte layer 202. For example, a material such as a sulfide solid electrolyte having excellent compression moldability being used for the second solid electrolyte 22 enables the composite particle 21 to reliably come into contact with the second solid electrolyte 22 by a simple process such as press molding. In addition, a gap does not readily generated between the composite particle 21 and the composite particle 21, and a thick ionic conduction path is readily formed between the composite particle 21 and the composite particle 21.

The second solid electrolyte 22 may have the shape of a particle. The average particle diameter of particles of the second solid electrolyte 22 is, for example, less than or equal to 1 µm . When the particles of the second solid electrolyte 22 have an appropriate average particle diameter, the second solid electrolyte 22 introduced between the composite particle 21 and the composite particle 21 is not readily separated. As a result, the ionic conductivity of a solid electrolyte portion in the negative electrode 201 can be sufficiently ensured. There is no particular limitation regarding the lower limit of the average particle diameter of the particles of the second solid electrolyte 22, and the lower limit is, for example, 0.1 µm.

The average particle diameter of the composite particle 21 is greater than the average particle diameter of the second solid electrolyte 22. Consequently, the second solid electrolyte 22 is readily introduced in a gap between the composite particle 21 and the composite particle 21, and, in addition, a continuous ionic conduction path due to the second solid electrolyte 22 is readily formed. The second solid electrolyte 22 may be provided with a flat shape due to press molding. In this regard, when the composite particle 21 is sufficiently larger than a particle of the second solid electrolyte 22, since the particles of the second solid electrolyte 22 are relatively uniformly present around the composite particle 21 so as to cover the composite particle 21, the second solid electrolyte 22 is not readily oriented in a specific direction. Consequently, ionic conduction paths can be sufficiently formed in the thickness direction and the in-plane direction of the negative electrode 201.

The ratio (R1/R2) of the average particle diameter R1 of the composite particle 21 to the average particle diameter R2 of the second solid electrolyte 22 may be, for example, greater than or equal to 3 and less than or equal to 120 or may be greater than or equal to 5 and less than or equal to 40, where the average particle diameter of the composite particle 21 is denoted by R1, and the average particle diameter of the second solid electrolyte 22 is denoted by R2.

The second solid electrolyte 22 has, for example, the same chemical composition as the chemical composition of the first solid electrolyte 32. According to such a configuration, the ionic conductivity of a solid electrolyte portion in the negative electrode 201 is improved.

The second solid electrolyte 22 may have a chemical composition different from the chemical composition of the first solid electrolyte 32. For example, sulfide glass ceramics having excellent compression moldability is used as the first solid electrolyte 32, and an argyrodite-type sulfide that has poor compression moldability and that has high ionic conductivity compared with the sulfide glass ceramics is used as the second solid electrolyte 22. In such an instance, a gap in the interior of the composite particle 21 is suppressed from being generated, and the contact surface between the silicon 31 and the first solid electrolyte 32 can be increased. In addition, the ionic conductivity of the solid electrolyte portion present between the composite particle 21 and the composite particle 21 can be enhanced. As a result, the input-output characteristics of the battery 200 may be further improved compared with an instance when a solid electrolyte having the same composition is used.

The second conductive material 23 is responsible for the role of a conductive auxiliary agent in the same manner akin to that of the first conductive material 33. The second conductive material 23 being present between a plurality of composite particles 21 enables the electron conductivity in the interior of the negative electrode 201 and between the composite particles 21 to be further enhanced.

Examples of the second conductive material 23 include carbon materials, metal materials, and conductive ceramics. Of these, carbon materials are light and chemically stable and, therefore, are suitable for the second conductive material 23. Examples of the carbon material include graphite, carbon black, and carbon fiber. The carbon material serving as the second conductive material 23 typically includes carbon fiber.

The average fiber diameter of the carbon fiber serving as the second conductive material 23 is, for example, greater than or equal to 0.02 µm and less than or equal to 0.2 µm.

In the negative electrode active material layer 12, the content of the composite particle 21 is, for example, greater than or equal to 30% by volume and less than or equal to 90% by volume. In the negative electrode active material layer 12, the content of the second solid electrolyte 22 is, for example, greater than or equal to 5% by volume and less than or equal to 60% by volume. In the negative electrode active material layer 12, the content of the second conductive material 23 is, for example, greater than or equal to 0.2% by volume and less than or equal to 20% by volume.

In the composite particle 21, the content of the silicon 31 is, for example, greater than or equal to 30% by volume and less than or equal to 90% by volume. In the composite particle 21, the content of the first solid electrolyte 32 is, for example, greater than or equal to 5% by volume and less than or equal to 60% by volume. In the composite particle 21, the content of the first conductive material 33 is, for example, greater than or equal to 0.2% by volume and less than or equal to 20% by volume.

Fig. 4 is a schematic sectional view illustrating a local structure of the negative electrode 201 (in particular, negative electrode active material layer 12). In Fig. 4, a portion surrounded by a thick line is the region of the composite particle 21. The direction parallel to the surface of the negative electrode collector 11 is indicated by reference HD. In a cross section of the negative electrode 201, the second solid electrolyte 22 has a plurality of crushed phases. Such a structure is caused by the negative electrode 201 being press-molded to enhance the contact between particles. The load of a pressing machine is applied parallel to the thickness direction of the negative electrode 201. When a pressure of the pressing machine is applied, the second solid electrolyte 22 is deformed so as to extend along a gap between the composite particle 21 and the composite particle 21. Therefore, the second solid electrolyte 22 tends to have a somewhat flat shape. However, the second solid electrolyte 22 relatively uniformly distributes around the composite particle 21 so as to cover the surface of the composite particle 21. Consequently, a plurality of phases of the second solid electrolyte 22 are not oriented in a specific direction. Meanwhile, the first solid electrolyte 32 has a plurality of phases distributed in the interior of a plurality of composite particles 21. The first solid electrolyte 32 is present in the interior of the composite particle 21 and is protected by a hard phase of the silicon 31. Consequently, the first solid electrolyte 32 does not readily receive a pressure from the pressing machine. Even when a plurality of phases of the first solid electrolyte 32 are oriented in a specific direction in the interior of the composite particle 21, since the composite particle 21 points in a random direction, the directions of a plurality of phases of the solid electrolyte (first solid electrolyte 32 and second solid electrolyte 22) are irregular with respect to the whole negative electrode 201. In other words, a plurality of phases of the first solid electrolyte 32 and a plurality of phases of the second solid electrolyte 22 included in a plurality of composite particles 21 do not exhibit orientation in a specific direction. For these reasons, continuous and thick ionic conduction paths are ensured in the thickness direction of the negative electrode 201 and in the in-plane direction of the negative electrode 201. As a result, the ionic conductivity of the negative electrode 201 can be improved.

In the related art, a coating film is formed by applying a slurry containing silicon, a solid electrolyte, a conductive auxiliary agent, and a solvent to a collector, and a negative electrode is formed by drying the coating film. Contact between particles is enhanced by pressurizing the negative electrode while heating is performed. During a step of heating and pressurization, particles of the solid electrolyte softer than silicon extends in the direction parallel to the surface of the collector. Consequently, the ionic conductivity in the direction parallel to the surface of the collector is sufficiently ensured, but an ionic conduction path is not readily formed in the thickness direction. In particular, when a difference between the average particle diameter of the silicon particles and the average particle diameter of the solid electrolyte particles is small, the solid electrolyte tends to be oriented in a specific direction. According to the technology of the present disclosure, the solid electrolyte can be suppressed from extending in a specific direction.

### (Solid electrolyte layer 202)

The solid electrolyte layer 202 may contain a solid electrolyte having lithium ion conductivity. The technology of the present disclosure also exerts a sufficient effect on a lithium solid-state battery.

Regarding the solid electrolyte contained in the solid electrolyte layer 202, for example, an inorganic solid electrolyte having lithium ion conductivity is used. Regarding the inorganic solid electrolyte, a sulfide solid electrolyte, an oxide solid electrolyte, a halide solid electrolyte, or the like is used.

The halide solid electrolyte may be used as the solid electrolyte contained in the solid electrolyte layer 202.

The halide solid electrolyte is denoted by, for example, Formula (1) below. In Formula (1), each of α, β, and γ represents a value greater than 0. M includes at least one element selected from the group consisting of metal elements except for Li and semimetal elements. X represents at least one selected from the group consisting of F, Cl, Br, and I.

Li_{α}M_{β}X_{γ} Formula (1)

The semimetal elements include B, Si, Ge, As, Sb, and Te. The metal elements include all elements in group I to group XII of the periodic table except for hydrogen and all elements of group XIII to group XVI except for B, Si, Ge, As, Sb, Te, C, N, P, O, S, and Se. That is, the metal elements are a group of elements, each of which can become a cation when the element and a halogen compound form an inorganic compound.

Regarding the halide solid electrolyte, Li₃YX₆, Li₂MgX₄, Li₂FeX₄, Li(Al,Ga,In)X₄, Li₃(Al,Ga,In)X₆, and the like can be used.

According to the above-described configuration, the output density of the battery 200 can be improved. In addition, the thermal stability of the battery 200 can be improved, and harmful gas such as hydrogen sulfide can be suppressed from being generated.

In the present disclosure, when an element in the formula is expressed as "(Al,Ga,In)", the expression represents at least one element selected from the group consisting of elements in the parentheses. That is, "(Al,Ga,In)" is synonymous with "at least one selected from the group consisting of Al, Ga, and In". The same applies to other elements. The halide solid electrolyte exhibits excellent ionic conductivity.

Regarding Formula (1), M may contain Y (= yttrium). That is, the halide solid electrolyte contained in the solid electrolyte layer 202 may contain Y as a metal element.

The halide solid electrolyte containing Y may be a compound denoted by Formula (2) below.

LiₐM_{b}Y_{c}X₆. Formula (2)

Formula (2) satisfies a + mb + 3c = 6 and c > 0. In Formula (2), M represents at least one element selected from the group consisting of metal elements except for Li and Y and semimetal elements. m represents a valence number of M. X represents at least one selected from the group consisting of F, Cl, Br, and I. M represents at least one selected from the group consisting of Mg, Ca, Sr, Ba, Zn, Sc, Al, Ga, Bi, Zr, Hf, Ti, Sn, Ta, and Nb. Regarding the halide solid electrolyte containing Y, specifically, Li₃YF₆, Li₃YCl₆, Li₃YBr₆, Li₃YI₆, Li₃YBrCl₅, Li₃YBr₃Cl₃, Li₃YBr₅Cl, Li₃YBr₅I, Li₃YBr₃I₃, Li₃YBrI₅, Li₃YClI₅, Li₃YCl₃I₃, Li₃YCl₅I, Li₃YBr₂Cl₂I₂, Li₃YBrCl₄I, Li_{2.7}Y_{1.1}Cl₆, Li_{2.5}Y_{0.5}Zr_{0.5}Cl₆, Li_{2.5}Y_{0.3}Zr_{0.7}Cl₆, and the like are used.

According to the above-described configuration, the output density of the battery 200 can be further improved.

The solid electrolyte contained in the solid electrolyte layer 202 may contain a sulfide solid electrolyte.

Regarding the sulfide solid electrolyte, Li₂S-P₂S₅, Li₂S-SiS₂, Li₂S-B₂S₃, Li₂S-GeS₂, Li_{3.25}Ge_{0.25}P_{0.75}S₄, Li₁₀GeP₂S₁₂, and the like may be used. LiX, Li₂O, MO_{q}, LiₚMO_{q}, and the like may be added to these. Herein, an element X in "LiX" represents at least one element selected from the group consisting of F, Cl, Br, and I. An element M in "MO_{q}" and "LiₚMO_{q}" represents at least one element selected from the group consisting of P, Si, Ge, B, Al, Ga, In, Fe, and Zn. Each of p and q in "MO_{q}" and "LiₚMO_{q}" represents a natural number.

Regarding the sulfide-based solid electrolyte, for example, lithium-containing sulfides of Li₂S-P₂S₅-based, Li₂S-SiS₂-based, Li₂S-B₂S₃-based, Li₂S-GeS₂-based, Li₂S-SiS₂-LiI-based, Li₂S-SiS₂-Li₃PO₄-based, Li₂S-Ge₂S₂-based, Li₂S-GeS₂-P₂S₅-based, Li₂S-GeS₂-ZnS-based, and the like are used.

The solid electrolyte contained in the solid electrolyte layer 202 may contain at least one selected from the group consisting of oxide solid electrolytes, polymeric solid electrolytes, and complex hydride solid electrolytes.

Regarding the oxide solid electrolyte, for example, NASICON-type solid electrolytes represented by LiTi₂(PO₄)₃ and element-substituted products thereof, (LaLi)TiO₃-based perovskite-type solid electrolytes, LISICON-type solid electrolytes represented by Li₁₄ZnGe₄O₁₆, Li₄SiO₄, and LiGeO₄ and element-substituted products thereof, garnet-type solid electrolytes represented by Li₇La₃Zr₂O₁₂ and element-substituted products thereof, Li₃N and H-substituted products thereof, Li₃PO₄ and N-substituted products thereof, and glass or glass ceramics in which a material such as Li₂SO₄ or Li₂CO₃ is added to a base material containing a Li-B-O compound such as LiBO₂ or Li₃BO₃ may be used.

Regarding the oxide solid electrolyte, for example, lithium-containing metal oxides such as Li₂O-SiO₂ and Li₂O-SiO₂-P₂O₅, lithium-containing metal nitrides such as LiₓP_{y}O_{1-z}N_{z}, and lithium-containing transition metal oxides such as lithium phosphate (Li₃PO₄) and lithium titanium oxide may be used.

Regarding the oxide solid electrolyte, for example, Li₇La₃Zr₂O₁₂ (LLZ), Li_{1.3}Al_{0.3}Ti_{1.7}(PO₄)₃ (LATP), and (La,Li)TiO₃ (LLTO) are used.

Regarding the polymeric solid electrolyte, for example, a compound of a polymeric compound and a lithium salt may be used. The polymeric compound may have an ethylene oxide structure. Since the polymeric compound can contain a large amount of lithium salt due to having the ethylene oxide structure, the ionic conductivity can be further increased. Regarding the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃ may be used. Regarding the lithium salt, one type of lithium salt selected from these may be used alone, or a mixture of at least two types of lithium salts selected from these may be used.

Regarding the complex hydride solid electrolyte, for example, LiBH₄-LiI and LiBH₄-P₂S₅ may be used.

The solid electrolyte layer 202 may contain only one type of solid electrolyte selected from the group consisting of the above-described solid electrolytes or may contain at least two types of solid electrolytes selected from the group consisting of the above-described solid electrolytes. A plurality of solid electrolytes have compositions which differ from each other. For example, the solid electrolyte layer 202 may contain a halide solid electrolyte and a sulfide solid electrolyte.

The thickness of the solid electrolyte layer 202 may be greater than or equal to 1 µm and less than or equal to 300 µm. When the thickness of the solid electrolyte layer 202 is greater than or equal to 1 µm, a short-circuit between the negative electrode 201 and the positive electrode 203 does not readily occur. When the thickness of the solid electrolyte layer 202 is less than or equal to 300 µm, the battery 200 can function with a high output.

### (Positive electrode 203)

The positive electrode 203 includes a positive electrode collector 17 and a positive electrode active material layer 18. The positive electrode collector 17 and the positive electrode active material layer 18 are in contact with each other. The positive electrode active material layer 18 is disposed between the positive electrode collector 17 and the solid electrolyte layer 202. The positive electrode 203 serves as the counter electrode of the negative electrode 201 and contributes to the function of the battery 200. The positive electrode collector 17 is formed of a conductive material such as a metal material or a carbon material.

The positive electrode 203 contains a positive electrode active material. The positive electrode active material may be a material having characteristics of occluding and releasing lithium ions. Regarding the positive electrode active material, for example, metal complex oxides, transition metal fluorides, polyanionic materials, fluorinated polyanionic materials, transition metal sulfides, transition metal oxysulfides, and transition metal oxynitrides may be used. In particular, a lithium-containing transition metal oxide being used as the positive electrode active material enables the production cost of the battery 200 to be decreased and enables the average discharge voltage to be increased.

The metal complex oxide selected as the positive electrode active material contained in the positive electrode 203 may contain Li and at least one element selected from the group consisting of Mn, Co, Ni, and Al. Examples of such a material include Li(NiCoAl)O₂, Li(NiCoMn)O₂, and LiCoO₂. For example, the positive electrode active material may be Li(NiCoMn)O₂.

The positive electrode 203 may contain a solid electrolyte. According to the above-described configuration, the lithium ion conductivity in the interior of the positive electrode 203 is enhanced, and the battery 200 can function with a high output. The materials exemplified as the solid electrolyte contained in the solid electrolyte layer 202 may be used as the solid electrolyte in the positive electrode 203.

The median diameter of the active material particles included in the positive electrode 203 may be greater than or equal to 0.1 µm and less than or equal to 100 µm. When the median diameter of the active material particles is greater than or equal to 0.1 µm, the active material particles and the solid electrolyte can form a favorable dispersion state. Consequently, the charge capacity of the battery 200 is improved. When the median diameter of the active material particles is less than or equal to 100 µm, the diffusion rate of lithium in the active material particles is sufficiently ensured. Consequently, the battery 200 can function with a high output.

The median diameter of the active material particles may be greater than the median diameter of the solid electrolyte particles. Consequently, the active material and the solid electrolyte can form a favorable dispersion state.

With respect to the volume ratio "v : 100 - v" of the active material to the solid electrolyte contained in the positive electrode 203, 30 ≤ v ≤ 95 may be satisfied. When 30 ≤ v is satisfied, the energy density of the battery 200 can be sufficiently ensured. In addition, when v ≤ 95 is satisfied, the battery 200 can function with a high output.

The thickness of the positive electrode 203 may be greater than or equal to 10 µm and less than or equal to 500 µm. When the thickness of the positive electrode 203 is greater than or equal to 10 µm, the energy density of the battery 200 is sufficiently ensured. When the thickness of the positive electrode 203 is less than or equal to 500 µm, the battery 200 can function with a high output.

To improve the adhesiveness between the particles, a binder may be contained in at least one selected from the group consisting of the negative electrode 201, the solid electrolyte layer 202, and the positive electrode 203. The binder is used to improve the bondability between the materials constituting the electrode. Examples of the binder include polyvinylidene fluorides, polytetrafluoroethylenes, polyethylenes, polypropylenes, aramid resins, polyamides, polyimides, polyamide-imides, polyacrylonitriles, polyacrylic acids, polyacrylic acid methyl esters, polyacrylic acid ethyl esters, polyacrylic acid hexyl esters, polymethacrylic acids, polymethacrylic acid methyl esters, polymethacrylic acid ethyl esters, polymethacrylic acid hexyl esters, polyvinyl acetates, polyvinylpyrrolidones, polyethers, polyether sulfones, hexafluoropolypropylenes, styrene-butadiene rubbers, carboxymethyl celluloses, and ethyl celluloses. In addition, copolymers of at least two materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may be used as the binder. In this regard, at least two selected from these may be mixed and used as the binder. The binder may be a styrene-ethylene-butylene-styrene block copolymer (SEBS) or may be a maleic-anhydride-modified hydrogenated SEBS.

To improve the electron conductivity, the positive electrode 203 may contain a conductive auxiliary agent. Regarding the conductive auxiliary agent, for example, graphite such as natural graphite and artificial graphite, carbon black such as acetylene black and Ketjenblack, conductive fibers such as carbon fiber and metal fiber, metal powders of carbon fluoride, aluminum, and the like, conductive whiskers of zinc oxide, potassium titanate, and the like, conductive metal oxides such as titanium oxide, and conductive polymer compounds such as polyanilines, polypyrroles, and polythiophenes may be used. When the carbon conductive auxiliary agent is used, a cost reduction can be performed.

The battery 200 may be constructed as batteries having various types of shapes such as a coin type, a cylindrical type, a square type, a sheet type, a button type, a flat type, and a laminated type.

Next, a producing method of the battery 200 will be described.

The battery 200 is obtained by laminating the positive electrode 203, the solid electrolyte layer 202, and the negative electrode 201 in this order. The positive electrode 203 and the solid electrolyte layer 202 may be produced by a known method such as a wet method or a dry method. In the wet method, a coating film is formed by applying a positive electrode slurry containing materials such as the positive electrode active material, solid electrolyte, and the solvent to the support such as the positive electrode collector 17. The positive electrode active material layer 18 is obtained by removing the solvent from the coating film. In the dry method, a powder mixture containing materials such as the positive electrode active material and the solid electrolyte is subjected to press molding. Consequently, the positive electrode active material layer 18 is obtained. These methods may also be applied to production of the solid electrolyte layer 202.

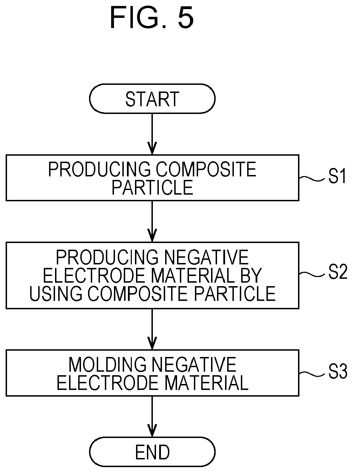

Fig. 5 is a step diagram illustrating a producing method of the negative electrode 201.

Initially, as illustrated in Step S1, the composite particle 21 is produced. There is no particular limitation regarding the method for producing the composite particle 21. In an example, a mix slurry is prepared by mixing a powder of the silicon 31, a powder of the first solid electrolyte 32, a powder of the first conductive material 33, a dispersion medium, and a binder. A coating film is formed by applying the mix slurry to a support such as a resin film. A mix sheet is obtained by removing the dispersion medium from the coating film. The dispersion medium may be removed from the coating film at room temperature or may be removed by heating the coating film. Subsequently, the mix sheet is pressurized while being heated such that each material adheres to each other. Consequently, a composite including the silicon 31, the first solid electrolyte 32, and the first conductive material 33 is obtained. A plurality of mix sheets may be laminated and pressurized. Thereafter, a composite powder is obtained by pulverizing the composite. The powder is classified by using a sieve having appropriate openings. Consequently, the composite particle 21 having a predetermined average particle diameter is obtained.

When the composite particle 21 is produced, the average particle diameter of the first solid electrolyte 32 may be smaller than the average particle diameter of particles of the silicon 31. In such an instance, in the interior of the composite particle 21, the first solid electrolyte 32 is readily introduced between particles of the silicon 31 without a gap, and particles of the first solid electrolyte 32 are not readily separated from each other. A contact surface between the silicon 31 and the first solid electrolyte 32 is readily ensured.

As illustrated in Step S2, the negative electrode material is produced using the composite particle 21. Specifically, the composite particle 21, the second solid electrolyte 22, and the second conductive material 23 are mixed. Consequently, the negative electrode material is obtained.

As illustrated in Step S3, the negative electrode material is molded. Specifically, a negative electrode mix slurry is prepared by mixing a dispersion medium and a binder into the negative electrode material including the composite particle 21, the second solid electrolyte 22, and the second conductive material 23. A coating film is formed by applying the negative electrode mix slurry to the negative electrode collector 11. The dispersion medium is removed from the coating film. Consequently, the negative electrode 201 is obtained. As the situation demands, a step of heating and pressurizing the negative electrode 201 may be performed.

The steps of Step S2 and Step S3 can also be performed in a single operation. That is, the negative electrode mix slurry may be prepared by mixing the composite particle 21, the second solid electrolyte 22, the second conductive material 23, the dispersion medium, and the binder.

### EXAMPLES

The present disclosure will be described below in detail with reference to the example and the comparative example. The present disclosure is not limited to the following example.

### 1. Production of solid electrolyte

Li₂S and P₂S₅ were weighed such that the molar ratio Li₂S:P₂S₅ = 75:25 was satisfied, and pulverization and mixing was performed in a mortar. Subsequently, mechanical milling treatment was performed using a planetary ball mill at 510 rpm for 10 hours. Consequently, a sulfide solid electrolyte, in a glass state, having a median diameter of 1 µm was obtained. The median diameter of the solid electrolyte particles was calculated by measuring the diameters of the solid electrolyte particles in a scanning electron microscope (SEM) image of the solid electrolyte particles.

### 2. Production of composite particle

Silicon particles having a median diameter of 0.4 µm was used as the negative electrode active material. The median diameter of the silicon particles was measured using a laser diffraction particle size analyzer (SALD-2000 produced by SHIMADZU CORPORATION). Carbon fiber having an average fiber diameter of 0.15 µm and an average fiber length of 6 µm (VGCF-H produced by SHOWA DENKO K.K.) was used as the conductive material.

Initially, the silicon, the solid electrolyte, the carbon fiber, and the binder (M1913 produced by Asahi Kasei Corporation) were weighed so as to satisfy the mass ratio of 69:24:5:2, a dispersion medium was added, and kneading was performed so as to obtain a mix slurry. A coating film was formed by applying the mix slurry to aluminum foil having a thickness of 15 µm. A mix sheet was obtained by drying the coating film at 100°C.

Two mix sheets were laminated such that the mix surfaces were in contact with each other, and pressing was performed at 100°C and 800 MPa. Thereafter, aluminum foil was peeled off the mix sheet. Consequently, a composite containing the silicon, the solid electrolyte, and the conductive material was obtained.

Subsequently, the composite was pulverized in an agate mortar and was treated with a sieve having openings of 32 µm. The powder passed through the sieve was recovered as the composite particle. The particle size distribution was measured with respect to an SEM image of the composite particle. D10, D50 (median diameter), and D90 of the composite particle were 3 µm, 7 µm, and 12 µm, respectively.

### 3. Production of negative electrode

### (a) Negative electrode A

The composite particle, the solid electrolyte, the carbon fiber, and the binder were weighed so as to satisfy the mass ratio of 69:24:5:2, a dispersion medium was added, and kneading was performed so as to obtain a negative electrode mix slurry. In consideration of the ratio of the components in the composite particle, the mass ratio of the silicon, the solid electrolyte, the carbon fiber, and the binder in the negative electrode mix slurry was 47:40.3:9.2:3.5.

A coating film was formed by applying the negative electrode mix slurry to copper foil having a thickness of 10 µm. The coating film was dried at 100°C. Consequently, Negative electrode A of the example was obtained.

### (b) Negative electrode B

The silicon, the solid electrolyte, the carbon fiber, and the binder were weighed so as to satisfy the mass ratio of 47:40.3:9.2:3.5, a dispersion medium was added, and kneading was performed so as to obtain a negative electrode mix slurry. A coating film was formed by applying the negative electrode mix slurry to copper foil having a thickness of 10 µm. The coating film was dried at 100°C. Consequently, Negative electrode B of the comparative example was obtained.

The thicknesses of Negative electrode A and Negative electrode B were adjusted such that the theoretical capacity of the negative electrode was set to be 12 mAh/cm². The theoretical capacity of the negative electrode was calculated on the basis of the mass of the silicon contained in the negative electrode mix and the theoretical capacity density per unit mass of the silicon (3,579 mAh/g).

### 4. Evaluation of ionic conductivity of negative electrode

For example, the ionic conductivity of Negative electrode A and Negative electrode B were evaluated in accordance with the method described in NPL 1. The ionic conductivity obtained by the present measurement indicates the ionic conductivity of the solid electrolyte portion in the negative electrode and is hereafter expressed as effective ionic conductivity.

### (1) Production of symmetric cell

Initially, 80 mg of solid electrolyte was weighed and placed in an insulating cylinder. The cross-sectional area of the interior of the insulating cylinder was 0.7 cm². The solid electrolyte in the insulating cylinder was press-molded at a pressure of 50 MPa. Thereafter, two Negative electrodes A were stamped out so as to have the same size as the inner diameter of the insulating cylinder. Negative electrodes A were disposed on both surfaces of the solid electrolyte such that the surface provided with the negative electrode mix was in contact with the solid electrolyte. Subsequently, a molded body having a structure of Negative electrode A / solid electrolyte layer / Negative electrode A was produced by press-molding Negative electrode A, the solid electrolyte, and Negative electrode A at a pressure of 800 MPa.

Next, both end surfaces of the molded body were pinched with stainless steel pins. Further, bolts were used, and a confining pressure of 150 MPa was applied to the molded body. The pins and the bolts functioned as confining members. Consequently, a symmetric cell including a solid electrolyte layer disposed between opposing Negative electrodes A was obtained.

The thickness of the molded body while the confining pressure was applied was measured using a contact-type displacement gauge. The thickness of the negative electrode mix was calculated by subtracting the thickness of the solid electrolyte layer and the thickness of the copper foil, which were measured in advance, from the thickness of the molded body.

### (2) Measurement of effective ionic conductivity

The effective ionic conductivity of Negative electrode A was calculated from the resistance with respect to the ionic conduction of the solid electrolyte portion in Negative electrode A presented in the Nyquist diagram obtained by measuring the impedance of the symmetric cell, the area of the symmetric cell, and the thickness of the negative electrode mix.

In the manner akin to that of Negative electrode A, a symmetric cell was produced using Negative electrode B, the impedance of the symmetric cell was measured, and the effective ionic conductivity of Negative electrode B was calculated.

Table 1 presents the effective ionic conductivity of Negative electrode A and Negative electrode B.

**[Table 1]**

| | Effective ionic conductivity (mS/cm) |
|---|---|
| Negative electrode A | 0.14 |
| Negative electrode B | 0.05 |

As presented in Table 1, Negative electrode A exhibited effective ionic conductivity about three times that of Negative electrode B.

### 5. Evaluation of charge-discharge characteristics

### (1) Production of battery

All-solid-state batteries A and B including Negative electrode A or Negative electrode B as a working electrode and including a lithium-indium alloy layer as a counter electrode were produced by the following method.

Initially, 80 mg of solid electrolyte was weighed and placed in an insulating cylinder. The cross-sectional area of the interior of the insulating cylinder was 0.7 cm². The solid electrolyte in the insulating cylinder was press-molded at a pressure of 50 MPa. Thereafter, a negative electrode was stamped out so as to have the same size as the inner diameter of the insulating cylinder. The negative electrode was disposed on one surface of the solid electrolyte such that the negative electrode mix layer of the negative electrode was in contact with the solid electrolyte. Subsequently, a multilayer body composed of the negative electrode and the solid electrolyte layer was produced by press-molding the negative electrode and the solid electrolyte at a pressure of 800 MPa. Thereafter, indium metal, lithium metal, and indium metal were disposed in this order on the solid electrolyte layer of the multilayer body. The thickness of the indium metal was 200 µm. The area of the main surface of the metal indium was 0.66 cm². The thickness of the lithium metal was 300 µm. The area of the main surface of the lithium metal was 0.58 cm². Consequently, the multilayer body having a three-layer structure of the negative electrode, the solid electrolyte layer, and an indium-lithium-indium layer was produced.

Next, both end surfaces of the multilayer body having a three-layer structure were pinched with stainless steel pins. Further, bolts were used, and a confining pressure of 150 MPa was applied to the multilayer body. The pins and the bolts functioned as confining members. Consequently, All-solid-state batteries A and B including Negative electrode A or Negative electrode B serving as a working electrode and the lithium-indium alloy layer serving as a counter electrode were obtained.

### (2) Charge-discharge test

Regarding Batteries A and B, charge was performed at room temperature and a constant current of a 0.05C-rate (20-hour rate). The battery was charged until the potential of the working electrode reached -0.615 V with reference to the counter electrode. Subsequently, the battery was discharged until the potential of the working electrode reached 0.9 V. Thereafter, 2 cycles of charge and discharge under the same condition were further performed. In this regard, with respect to this operation, charge means reduction of the working electrode. Discharge means oxidation of the working electrode.

After the above-described charge and discharge, regarding Batteries A and B, charge was performed at room temperature and a constant current of a 0.3C-rate (10/3-hour rate). The battery was charged until the potential of the working electrode reached -0.615 V with reference to the counter electrode.

Table 2 presents the ratio of the charge capacity of the battery at a 0.3C-rate to the charge capacity of the battery at a 0.05C-rate in the third cycle of the charge-discharge test. The item "0.3C/0.05C charge capacity ratio" presents the ratio of the charge capacity of the battery at a 0.3C-rate to the charge capacity of the battery at a 0.05C-rate in the third cycle of the charge-discharge test.

**[Table 2]**

| | 0.3C/0.05C charge capacity ratio (%) |
|---|---|
| Battery A | 52 |
| Battery B | 26 |

As presented in Table 2, Battery A exhibited the 0.3C/0.05C charge capacity ratio twice that of Battery B.

### Industrial Applicability

The negative electrode material according to the present disclosure can be used as, for example, a negative electrode material of a solid-state battery. The battery according to the present disclosure can be used as, for example, a power supply of a device such as portable electronic equipment, an electric car, or an electric power storage apparatus.

### Reference Signs List

- 11: negative electrode collector
- 12: negative electrode active material layer
- 17: positive electrode collector
- 18: positive electrode active material layer
- 21: composite particle
- 22: second solid electrolyte
- 23: second conductive material
- 31: silicon
- 32: first solid electrolyte
- 33: first conductive material
- 200: battery
- 201: negative electrode
- 202: solid electrolyte layer
- 203: positive electrode

## Claims

1. A negative electrode material comprising:
a plurality of composite particles including an active material containing silicon, a first solid electrolyte, and a first conductive material; and
a second solid electrolyte,
wherein the second solid electrolyte is present between the composite particle and the composite particle.

2. The negative electrode material according to claim 1,
wherein the second solid electrolyte has the same chemical composition as the chemical composition of the first solid electrolyte.

3. The negative electrode material according to claim 1,
wherein the second solid electrolyte has a chemical composition different from a chemical composition of the first solid electrolyte.

4. The negative electrode material according to any one of claims 1 to 3,
wherein an average particle diameter of the plurality of composite particles is greater than or equal to 3 µm and less than or equal to 12 µm.

5. The negative electrode material according to any one of claims 1 to 4,
wherein the active material containing silicon has a shape of a particle, and
an average particle diameter of particles of the active material containing silicon is less than or equal to 1 µm .

6. The negative electrode material according to any one of claims 1 to 5,
wherein the first solid electrolyte has a shape of a particle, and
an average particle diameter of particles of the first solid electrolyte is less than or equal to 1 µm .

7. The negative electrode material according to any one of claims 1 to 6,
wherein the second solid electrolyte has a shape of a particle, and
an average particle diameter of particles of the second solid electrolyte is less than or equal to 1 µm .

8. The negative electrode material according to any one of claims 1 to 7,
wherein the first conductive material contains a first carbon material.

9. The negative electrode material according to claim 8,
wherein the first carbon material contains carbon fiber.

10. The negative electrode material according to claim 9,
wherein an average fiber diameter of the carbon fiber is less than or equal to 0.2 11m.

11. The negative electrode material according to any one of claims 1 to 10, further comprising a second conductive material,
wherein the second conductive material is present between the composite particle and the composite particle.

12. The negative electrode material according to claim 11,
wherein the second conductive material contains a second carbon material.

13. A negative electrode comprising:
a negative electrode collector, and
a negative electrode active material layer supported by the negative electrode collector,
wherein the negative electrode active material layer contains the negative electrode material according to any one of claims 1 to 12.

14. The negative electrode according to claim 13,
wherein, in a cross section of the negative electrode, the second solid electrolyte has a plurality of crushed phases, and the first solid electrolyte has a plurality of phases distributed in the interior of the plurality of composite particles, and
the plurality of phases of the first solid electrolyte included in the plurality of composite particles and the plurality of phases of the second solid electrolyte have no orientation in a specific direction.

15. A battery comprising:
a positive electrode;
the negative electrode according to claim 13 or claim 14; and
a solid electrolyte layer disposed between the positive electrode and the negative electrode.

16. A method for producing a negative electrode material comprising:
mixing
a plurality of composite particles including an active material containing silicon, a first solid electrolyte, and a first conductive material and
a second solid electrolyte,
wherein the second solid electrolyte is present between the composite particle and the composite particle.

17. The method for producing a negative electrode material according to claim 16, further comprising producing the composite particle by mixing the active material containing silicon, the first solid electrolyte, and the first conductive material.

18. A method for producing a negative electrode comprising:
molding the negative electrode material produced by the method for producing a negative electrode material according to claim 16 or claim 17.

19. A method for producing a battery comprising:
laminating a negative electrode produced by the method for producing a negative electrode according to claim 18, an electrolyte layer, and a positive electrode.
